# EUROPEAN PATENT SPECIFICATION

(11) **EP 3 775 051 B1**
(45) Date of publication and mention of the grant of the patent: **04.06.2025**
(21) Application number: 19713473.7
(22) Date of filing: 27.03.2019
(51) Int. Cl.: B27N 1/00, B27N 1/02, B27N 3/00, B27N 3/02, C09J 161/20, D04H 1/64, C08G 12/06

(54) **WOOD BOARDS**
HOLZPLATTEN
PANNEAUX EN BOIS

(30) Priority: 27.03.2018 GB 201804906
(43) Date of publication of application: 17.02.2021
(73) Proprietor: Knauf Insulation SPRL, 4600 Visé (BE)
(72) Inventor: HAND, Richard, 1435 Mont-Saint-Guibert (BE); LAING, James, 1435 Mont-Saint-Guibert (BE)
(74) Representative: ARC-IP
(86) International application number: PCT/EP2019/057801
(87) International publication number: WO 2019/185760

(56) References cited:
- WO-A1-2008/089847
- WO-A1-2011/138458
- WO-A1-2017/207355
- WO-A2-2014/086775

## Description

The present invention relates to wood boards and a method for their production. The present invention provides binder compositions with properties including excellent curing rates, bond strength, parting strength, tensile strength and low swelling properties, ease of handling and good storage stability. Examples of known binders are disclosed in: WO2014/086775 A2. The invention is defined in the appended claims. Any disclosure lying outside the scope of said claims is only intended for illustrative as well as comparative purposes.

In accordance with one aspect as defined in claim 1, the present invention provides a method of manufacturing a wood board, comprising:
- applying a binder composition, notably in the form of an aqueous solution, to loose wood matter to provide resinated loose wood matter, wherein the binder composition consists of a binder composition prepared by combining reactants comprising at least 50% by dry weight reducing sugar reactant(s) and at least 5% by dry weight nitrogen-containing reactant(s); and
- arranging the resinated wood matter as a sheet of loosely arranged resinated wood matter; and
- subjecting the sheet of loosely arranged resinated wood matter to heat and pressure to cure the binder composition and to form the wood board from the sheet of loosely arranged resinated wood;
- wherein the nitrogen-containing reactant(s) comprise TPTA triprimary triamine(s), notably wherein the nitrogen-containing reactant(s) comprise at least 5% by dry weight of TPTA triprimary triamine(s).

The dependent claims define preferred or alternative embodiments.

As used herein, the term "TPTA triprimary triamine(s)" means triprimary triamine(s) selected from:
- triprimary triamine(s) having spacer groups between each of the three primary amines which consist of carbon chains;
- triprimary triamine(s) having spacer groups between each of the three primary amines wherein each spacer group has a spacer length which is less than or equal to 12 polyvalent atoms; and
- triprimary triamine(s) having a total number of polyvalent atoms which is less than or equal to 23.

In one preferred embodiment of the present disclosure the TPTA triprimary triamine(s) comprise, and more preferably consist of, triprimary triamine(s) having spacer groups between each of the three primary amines which consist of carbon chains. In another preferred embodiment of the present disclosure the TPTA triprimary triamine(s) comprise, and more preferably consist of, triprimary triamine(s) having spacer groups between each of the three primary amines wherein each spacer group has a spacer length which is less than or equal to 12 polyvalent atoms. In a further preferred embodiment of the present disclosure the TPTA triprimary triamine(s) comprise, and more preferably consist of, triprimary triamine(s) having a total number of polyvalent atoms which is less than or equal to 23. As defined in the present invention, the TPTA triprimary triamine(s) are organic compound(s) having three and only three amines, each of the amines being primary amines or salts thereof, and having spacer groups between each of the three primary amines which consist of carbon chains.

The method may be used for the manufacture of engineered wood, composite wood, man-made wood, or manufactured board notably manufactured by binding strands, particles, fibers, plies veneers or layers of wood, together with a binder, notably an organic binder. The method is particularly suitable for the manufacture of a wood particle board or resin bonded particle board, comprising or consisting of wood particles held together by a binder, notably an organic binder. In this case, the loose wood matter comprises, consists essentially of or consists of wood particles. The particle board may be a P1, P2, P3, P4, P5, P6 or P7 particle board as described and/or defined in EN 312:2003. The wood board may be: an oriented strand board (OSB), notably an OSB/1, OSB/2, OSB/3 or OSB/4 oriented strand board as described in and/or meeting the requirements of EN 300:2006. The wood board may be plywood, notably a wood based panel consisting of an assembly of layers glued together with the direction of the grain in adjacent layers being offset, notably offset at right angles; it may be plywood as described in and/or meeting the requirements of ISO 12465:2007 or EN 313-2:2000 or EN 313-1:1996 or EN 636:2003. The wood board may be a fiberboard, notably a hardboard (HB), a medium board (MBL or MBH), a softboard (SB) or a medium density fiber board (MDF), notably as described in and/or meeting the requirements of EN 622-1:2003. The wood board may be a medium density fiberboard MDF, notably a MDF.H, MDF.LA, MDF.HLS, L-MDF, L.MDF.H, UL1-MDF, UL2-MDF, or MDF.RWH, notably as described in and/or meeting the requirements of EN 622-5:2009. The wood board may be provided with a facing, for example a veneer or a melamine layer, for example to improve its visual appearance and/or durability of its surface(s).

In accordance with another aspect, the present disclosure provides a wood board, manufactured by a method comprising:
- applying a binder composition, notably in the form of an aqueous solution, to loose wood matter to provide resinated loose wood matter, wherein the binder composition consists of a binder composition prepared by combining reactants comprising at least 50% by dry weight reducing sugar reactant(s) and at least 5% by dry weight nitrogen-containing reactant(s); and
- arranging the resinated wood matter as a sheet of loosely arranged resinated wood matter; and
- subjecting the sheet of loosely arranged resinated wood matter to heat and pressure to cure the binder composition and to form the wood board from the sheet of loosely arranged resinated wood;
- wherein the nitrogen-containing reactant(s) comprise TPTA triprimary triamine(s), notably wherein the nitrogen-containing reactant(s) comprise at least 5% by dry weight of TPTA triprimary triamine(s).

According to a further aspect, the present disclosure provides a method of manufacturing a wood particle board comprising;
applying a binder composition in the form of an aqueous solution to wood particles to provide resinated wood particles, wherein the binder composition consists of a binder composition prepared by combining reactants consisting of between 60% and 95% by dry weight reducing sugar reactant(s) and between 5% and 40% by dry weight nitrogen-containing reactant(s); and
- forming the resinated wood particles into a resinated mat of loosely arranged resinated wood particles; and
- subjecting the resinated mat to heat and pressure to cure the binder composition and to form the wood particle board ;
- wherein the nitrogen-containing reactant(s) comprise at least 95 wt% of triprimary triamine(s) having spacer groups between each of the three primary amines which consist of carbon chains.

Any feature described herein in relation to a particular aspect of the disclosure may be used in relation to any other aspect of the disclosure.

The term "binder composition" as used herein means all ingredients applied to the wood matter and/or present on the wood matter, notably prior to curing, (other than the wood matter itself and any moisture in the wood matter), including reactants, solvents (including water) and additives. The term "dry weight of the binder composition" as used herein means the weight of all components of the binder composition other than any water that is present (whether in the form of liquid water or in the form of water of crystallization). The reactants may make up ≥ 80 %, ≥ 90 % or ≥ 95 % and/or ≤ 99 % or ≤ 98 % by dry weight of the binder composition. In some embodiments, the binder composition includes one or more fillers, for example for the manufacture of plywood; the filler(s) may make up ≥ 15 %, ≥ 20 % or ≥ 25 % and/or ≤ 55 %, ≤ 50 % or ≤ 40 % by dry weight of the binder composition and/or of the cured binder. Particularly where the binder composition comprises fillers, the reactants may make up ≥ 50 %, ≥ 60 % or ≥ 65 % and/or ≤ 90 % , ≤ 85 % or ≤ 80 % by dry weight of the binder composition.

The binder composition applied to the wood matter comprises reactants which cross-link when cured to form a cured binder which holds the wood matter of the wood board together. The binder composition comprises reactants that will preferably form a thermoset resin upon curing.

The binder composition is preferably free of, or comprises no more than 2 wt%, no more than 5 wt% or no more than 10 wt% of urea formaldehyde (UF), melamine urea formaldehyde (MUF) and/or phenol formaldehyde.

The binder composition is preferably a "no added formaldehyde binder" that is to say that none of ingredients used to form the binder composition comprise formaldehyde. It may be "substantially formaldehyde free", that is to say that it liberates less than 5 ppm formaldehyde as a result of drying and/or curing (or appropriate tests simulating drying and/or curing); more preferably it is "formaldehyde free", that is to say that it liberates less than 1 ppm formaldehyde in such conditions.

The term "a sheet of loosely arranged resinated wood matter" as used herein means that the resinated wood matter is assembled together with sufficient integrity for the sheet to be processed along a production line but without the resinated wood matter being permanently joined together in a way that is achieved by fully cross-linking the binder composition. Prior to curing, the binder composition preferably provides a stickiness or tackiness which holds that loosely arranged wood matter together. For example, in the case of wood particle board, the sheet of loosely arranged wood matter preferably has sufficient cohesion to be retained in the form or a sheet or mat, notably when passing along a production line, and/or being transferred between conveyor belts. In the case of plywood, the individual plies in a sheet of loosely arranged resinated wood matter preferably have sufficient cohesion to avoid relative movement between the plies, notably when passing along a production line, and/or being transferred between conveyor belts.

Preferably, the binder composition is a reducing sugar based binder composition, that is to say that at least 50 wt% of the reactants comprise reducing sugar(s) and/or reaction products of reducing sugar(s). The binder composition may be prepared by combining reactants comprising, consisting essentially of or consisting of the reducing sugar reactant(s) and the nitrogen-containing reactant(s). In the form in which it is applied to the wood matter the binder composition may comprise (a) the reducing sugar reactant(s) and the nitrogen-containing reactant(s) and/or (b) curable reaction product(s) of the reducing sugar reactant(s) and the nitrogen-containing reactant(s).

As used herein, the term "consist or consisting essentially of" is intended to limit the scope of a statement or claim to the specified materials or steps and those that do not materially affect the basic and novel characteristic(s) of the invention.

The reducing sugar reactant(s) may comprise: a monosaccharide, a monosaccharide in its aldose or ketose form, a disaccharide, a polysaccharide, a triose, a tetrose, a pentose, xylose, a hexose, dextrose, fructose, a heptose, or mixtures thereof. The reducing sugar reactant(s) may be yielded in situ by carbohydrate reactant(s), notably carbohydrate reactant(s) having a dextrose equivalent of at least about 50, at least about 60, at least about 70, at least about 80 or at least about 90, notably carbohydrate reactant(s) selected from the group consisting of molasses, starch, starch hydrolysate, cellulose hydrolysates, and mixtures thereof. The reducing sugar reactant(s) may comprise or consist of a combination of dextrose and fructose, for example in which the combination of dextrose and fructose makes up at least 80 wt% of the reducing sugar reactant(s) and/or in which the dextrose makes up at least 40% wt% of the reducing sugar reactant(s) and/or in which the fructose makes up at least 40% wt% of the reducing sugar reactant(s); the reducing sugar reactant(s) may comprise or consist of high fructose corn syrup (HFCS). The reducing sugar reactant(s) may comprise or consist of reducing sugar reactant(s) yielded in situ by sucrose. The reducing sugar reactant(s) may comprise reducing sugar reactant(s) selected from the group consisting of xylose, arabinose dextrose, mannose, fructose and combinations thereof, for example making up at least 80 wt% of the reducing sugar reactant(s).

As used herein, the term "nitrogen-containing reactant(s)" means one or more chemical compound which contain(s) at least one nitrogen atom and which is/are capable of reacting with the reducing sugar reactant(s); preferably the nitrogen-containing reactant(s) consist of Maillard reactant(s), that is to say reactant(s) which is/are capable of reacting with the reducing sugar reactant(s) as part of a Maillard reaction.

The nitrogen-containing reactant(s) comprise, and may consist essentially of or consist of, triprimary triamine(s) having spacer groups between each of the three primary amines which consist of carbon chains. The triprimary triamine(s) may be selected from the group consisting of triaminodecanes, triaminononanes, notably 4-(aminomethyl)-1,8-octanediamine, triaminooctanes, triaminoheptanes, notably 1,4,7-triaminoheptane, triaminohexanes, notably 1,3,6-triaminohexane, triaminopentanes, and including isomers and combination thereof.

As used herein the term "triprimary triamine(s)" means organic compound having three and only three amines, each of the three amines being primary amines (-NH₂). One, two or each of the primary amine(s) of the triprimary triamine(s) may be present in the form of a salt, e.g as an ammonium group (-NH₃⁺).

As used herein, the term "spacer group" in the terminology "the spacer group(s) separating each of the three primary amines" means a chain separating two primary amines. As used herein, the term "the spacer group(s) separating each primary amines in the molecule consists of carbon chains" means that the spacer group(s) consist only of carbon atoms bonded to hydrogen atoms or bonded to other carbon atoms. The triprimary triamine(s) having spacer groups between each of the three primary amines which consist of carbon chains thus consist of the three primary amines and carbon and hydrogen atoms. For example, when the spacer group(s) separating each primary amine in the molecule consists of carbon chains, no heteroatoms are present in the spacer groups.

The spacer group(s) may be selected from the group consisting of alkanediyls, heteroalkanediyls, alkenediyls, heteroalkenediyls, alkynediyls, heteroalkynediyls, linear alkanediyls, linear heteroalkanediyls, linear alkenediyls, linear heteroalkenediyls, linear alkynediyls, linear heteroalkynediyls, cycloalkanediyls, cycloheteroalkanediyls, cycloalkenediyls, cycloheteroalkenediyls, cycloalkynediyls and cycloheteroalkynediyls, each of which may be branched or unbranched. The spacer group(s) may be selected from the group consisting of alkanediyls, alkenediyls, alkynediyls, linear alkanediyls, linear alkenediyls, linear alkynediyls, cycloalkanediyls, cycloalkenediyls and cycloalkynediyls, each of which may be branched or unbranched. The spacer group may comprise or may be devoid of halogen atoms. The spacer groups may comprise or be devoid of aromatic groups. As used herein: the term "alkanediyl" means a saturated chain of carbon atoms ie without carbon-carbon double or triple bonds; the term "alkenediyl" means a chain of carbon atoms that comprises at least one carbon-carbon double bond; the term "alkynediyl" means a chain of carbon atoms that comprises at least one carbon-carbon triple bond; the term "cyclo" in relation to cycloalkanediyl, cycloalkenediyl and cycloalkynediyl indicates that at least a portion of the chain is cyclic and also includes polycyclic structures; and the term "linear" in relation to alkanediyls, alkenediyls and alkynediyls indicates an absence of a cyclic portion in the chain. As used herein, the term "hetero" in relation to heteroalkanediyls, heteroalkenediyls, heteroalkynediyls, linear heteroalkanediyls, linear heteroalkenediyls, linear heteroalkynediyls, cycloheteroalkanediyls, cycloheteroalkenediyls, and cycloheteroalkynediyls means that the chain comprise at least one polyvalent heteroatom. As used herein, the term heteroatom is any atom that is not carbon or hydrogen. As used herein, the term polyvalent atom means an atom that is able to be covalently bonded to at least 2 other atoms. The polyvalent heteroatom may be oxygen; it may be silicon; it may be sulfur or phosphorus. One, two or preferably each of the spacer groups may have a total number of polyvalent atoms, or a total number of carbon atoms which is ≥3, ≥4 or ≥5 and/or ≤12, ≤10 or ≤9. One, two or preferably each of the spacer groups may have a spacer length which is ≥3, ≥4 or ≥5 and/or ≤12, ≤10 or ≤9. As used herein, the term "spacer length" in relation to a spacer group separating two primary amines means the number of polyvalent atoms which form the shortest chain of covalently bonded atoms between the two primary amines. Each of the spacer groups between the three primary amines of the TPTA triprimary triamine(s) may: consist of an alkanediyl; and/or be linear; and/or be unbranched; and/or have a number of carbon atoms which is ≥3 or ≥4 and/or ≤9 or ≤8; and or have a spacer length which is ≥3 or ≥4 and/or ≤9 or ≤8. The total number of the polyvalent atoms of the TPTA triprimary triamine(s) may be ≥9, ≥11 or ≥12 and/or ≤23, ≤21, ≤19 or ≤17.

The nitrogen-containing reactant(s) may comprise reactant(s) selected from the group consisting of: inorganic amines, organic amines, organic amines comprising at least one primary amine, salts of an organic amine comprising at least one primary amine, polyamines, polyprimary polyamines and combinations thereof, any of which may be substituted or unsubstituted. The nitrogen-containing reactant(s) may comprise NH₃, NH₃ may be used as such (e.g. in form of an aqueous solution), or as an inorganic or organic ammonium salt, for example ammonium sulfate, ammonium phosphate, e.g. diammonium phosphate or ammonium citrate, e.g. triammonium citrate, or as a source of NH₃, e.g. urea. In one preferred embodiment, the nitrogen-containing reactant(s) comprise ammonium sulfate. In another preferred embodiment, the nitrogen-containing reactant(s) comprise ammonium citrate. As used herein, the term "polyamine" means any organic compound having two or more amine groups and the term " polyprimary polyamine" means an organic compound having two or more primary amines (-NH₂). As used herein the term "substituted" means the replacement of one or more hydrogen atoms with other functional groups. Such other functional groups may include hydroxyl, halo, thiol, alkyl, haloalkyl, heteroalkyl, aryl, arylalkyl, arylheteroalkyl, nitro, sulfonic acids and derivatives thereof, carboxylic acids and derivatives thereof.

The polyprimary polyamine may be a diamine, triamine, tetramine, or pentamine. As used herein the term "diamine" means organic compound having two (and only two) amines, "triamine" means organic compound having three (and only three) amines, "tetramine" means organic compound having four (and only four) amines and "pentamine" means organic compound having five (and only five) amines. For example, the polyprimary amine may be: a triamine selected from diethylenetriamine (which is a diprimary triamine, i.e. diethylenetriamine has three amines, two of them being primary amines) or bis(hexamethylene)triamine; a tetramine, notably triethylenetetramine; or a pentamine, notably tetraethylenepentamine. The polyprimary polyamine may comprise diprimary diamine, notably 1,6-diaminohexane (hexamethylenediamine, HMDA) or 1,5-diamino-2-methylpentane (2-methyl-pentamethylenediamine).

The binder composition may comprise, consist essentially of or consist of a binder composition prepared by combining reactants wherein:
the reducing sugar reactant(s) make up:
- ≥50 %, ≥60%, ≥70% by dry weight of the reactant(s), and/or
- ≤ 97%, ≤ 95 %, ≤90%, ≤ 85% by dry weight of the reactant(s), and/or the nitrogen-containing reactant(s) make up:
- ≥3%, ≥5 %, ≥7 %, ≥10 %, ≥15% by dry weight of the reactant(s), and/or
- ≤ 50 %, ≤ 40%, ≤ 30 %, ≤ 25 % by dry weight of the reactant(s).

The binder composition may comprise, consist essentially of or consist of a binder composition prepared by combining reactants consisting of between 60% and 95% by dry weight reducing sugar reactant(s) and between 5% and 40% by dry weight nitrogen-containing reactant(s).

The TPTA triprimary triamine(s) may make up:
- ≥3%, ≥5 %, ≥7 %, ≥ 10 %, ≥15%, and/or
- ≤ 40%, ≤ 35 %, ≤ 30%, ≤ 25 %
by dry weight of the reactants of the binder composition.

The TPTA triprimary triamine(s) may make up:
- ≥ 5 %, ≥ 10 %, ≥ 15 %, ≥ 20 %, ≥ 30 %, ≥ 40 %, ≥ 50 %, ≥ 60 %, ≥ 65 %; and/or
- ≤ 95%, ≤ 90 %, ≤ 85 %, ≤ 80 %, ≤ 70 %, ≤ 60 %, ≤ 50 %, ≤ 45%, ≤ 30 %
by dry weight of the nitrogen-containing reactants.

The TPTA triprimary triamine(s) may make up: ≥ 90 % and ≤ 99%; or ≥ 80 % and ≤ 90%; or ≥ 60 % and ≤ 80%; by dry weight of the nitrogen-containing reactants. Particularly in the aforementioned cases, the remaining nitrogen-containing reactants may comprise amines and/or nitriles.

When the nitrogen-containing reactant(s) comprise nitrogen-containing reactant(s) other than TPTA triprimary triamine(s), the and notably each nitrogen-containing reactant other than TPTA triprimary triamine(s), may make up:
- ≥ 3%, ≥ 5 %, ≥ 7 %, ≥ 10 %, ≥ 15%, and/or
- ≤ 40%, ≤ 35 %, ≤ 30%, ≤ 25 %
by dry weight of the reactants of the binder composition.

The and notably each nitrogen-containing reactant other than TPTA triprimary triamine(s), may make up:
- ≥ 5 %, ≥ 10 %, ≥15 %, ≥ 20 %, ≥ 30 %, ≥ 40 %, ≥ 50 %, ≥ 60 %, ≥ 65 %; and/or
- ≤ 95%, ≤ 90 %, ≤ 85 %, ≤ 80 %, ≤ 70 %, ≤ 60 %, ≤ 50 %, ≤ 45%, ≤30 %
by dry weight of the nitrogen-containing reactants.

The ratio of carbonyl groups in the reducing sugar reactant(s) to reactive amino groups in the nitrogen-containing reactant(s) may be in the range of 5:1 to 1:2. For example, the ratio of carbonyl groups to reactive amino groups may be in the range of 5:1 to 1:1.8, 5:1 to 1:1.5, 5:1 to 1:1.2, 5:1 to 1:1, 5:1 to 1:0.8 and 5:1 to 1:0.5. Further examples include ratios such as 4:1 to 1:2, 3.5:1 to 1:2, 3:1 to 1:2, 2.5:1 to 1:2, 2:1 to 1:2 and 1.5:1 to 1:2. As used herein, the term "reactive amino group" means any amino group in the nitrogen-containing reactant(s) which is capable of reacting with the reducing sugar reactant(s). Specifically, examples of such reactive amino groups comprise primary and secondary amine(s).

The nitrogen-containing reactant(s) and the reducing sugar reactant(s) are preferably Maillard reactant(s). The nitrogen-containing reactant(s) and the reducing sugar reactant(s) (or their reaction product(s)) preferably react to form Maillard reaction products, notably melanoidins when cured. Curing of the binder composition may comprise or consist essentially of Maillard reaction(s). Preferably, the cured binder consists essentially of Maillard reaction products. The cured binder composition may comprise melanoidin-containing and/or nitrogenous-containing polymer(s); it is preferably a thermoset binder and is preferably substantially water insoluble.

The binder composition and/or the cured binder may comprise ester and/or polyester compounds.

The binder composition may be prepared by combining all the reducing sugar reactant(s) and all the nitrogen-containing reactant(s) in a single preparation step, for example by dissolving the reducing sugar reactant(s) in water and then adding the nitrogen-containing reactant(s). The term "single preparation step" is used herein to differentiate from a "multiple preparation step" preparation in which a first portion of reactants are combined and stored and/or allowed to react for a pre-determined time before addition of further reactants.

Alternatively, the binder composition may be prepared by:
- combining reducing sugar reactant(s), notably all of the reducing sugar reactant(s), with a first portion of the nitrogen-containing reactant(s) to provide an intermediate binder composition,
- storing the intermediate binder composition; and
- combining the intermediate binder composition with a second portion of the nitrogen-containing reactant(s) to provide the binder composition.

The intermediate binder composition may comprise, consist essentially of or consist of reaction products of the reducing sugar reactant(s), with a first portion of the nitrogen-containing reactant(s). The reactants may be heated to provide the intermediate binder composition; the intermediate binder composition may be subsequently cooled.

The first and second portions of nitrogen-containing reactant(s) may be the same nitrogen-containing reactant(s) or, alternatively they may be different nitrogen-containing reactant(s). Only one of the first and second portion of nitrogen-containing reactant(s), or alternatively each of the first and second portion of nitrogen-containing reactant(s), may comprise, consist essentially of or consist of TPTA triprimary triamine(s).

As used herein "storing the intermediate binder composition" means that the intermediate binder composition is stored or shipped for a prolonged time, notably without crystallization of the reducing sugar reactant(s) or gelling which would render the binder composition unusable. The intermediate binder composition may be stored for a period of at least 30 min, at least 1h, at least 4h, at least 12h, at least 24h, at least 96h, at least 1 week, at least 2 weeks, or at least 4 weeks.

The binder composition may comprise one or more additives, for example one or more additives selected from waxes, dyes, release agents, formaldehyde scavengers (for example urea, tannins, quebracho extract, ammonium phosphate, bisulfite), water repellent agent, silanes, silicones, lignins, lignosulphonates and non-carbohydrate polyhydroxy component selected from glycerol, polyethylene glycol, polypropylene glycol, trimethylolpropane, pentaerythritol, polyvinyl alcohol, partially hydrolyzed polyvinyl acetate, fully hydrolyzed polyvinyl acetate, or mixtures thereof. Such additives are generally not reactants of the binder composition, that is to say they do not cross-link with the reducing sugar and/or the nitrogen containing reactant(s) (or reaction products thereof) as part of the curing of the binder composition.

The binder composition may be applied to the wood matter in the form of a liquid, notably in the form of an aqueous composition, for example comprising an aqueous solution or dispersion, notably in which the dry weight of the aqueous binder composition makes up: ≥ 40 wt%, ≥ 45 wt%, ≥ 50 wt%, ≥ 55 wt% or ≥ 60 wt% and/or ≤ 95 wt%, ≤ 90 wt%, ≤ 85 wt% or ≤ 80 wt% of the total weight of the aqueous binder composition. Alternatively, the binder composition may be applied to the wood matter in the form of a solid, for example as a powder or as particles. The binder composition may be applied by being sprayed; this is particularly suitable for manufacturing wood particle board. The binder composition may be applied to wood particles by passing the wood particles through a spray of the binder composition or by spraying the binder composition over the wood particles, for example whilst the wood particles are being mixed. Preferably, the wood particles are mixed subsequent to application of the binder composition, for example by tumbling, notably in a mixer or bunker. The binder composition may be applied by being spread, for example as a continuous layer or as a discontinuous layer, for example as lines of binder; this is particularly suitable for the manufacture of plywood.

The wood boards, notably once cured, may comprise at least 70%, at least 80%, at least 90% or at least 95% by weight of wood matter.

The binder loading, that is to say the amount of binder applied to the loose wood matter and calculated in terms of the dry weight of the binder composition applied to the loose wood matter with respect to the combined weight of i) the dry weight of the loose wood matter and ii) the dry weight of the binder composition applied to the wood matter may be ≥ 1.5 %, ≥ 2 %, ≥ 2.5 %, ≥ 3 %, ≥ 5 %, ≥ 7 % and/or ≤ 15%, ≤ 13%, ≤ 11%.

The thickness of the wood board may be ≥ 5 mm, ≥ 8 mm, ≥ 10 mm, or ≥ 15 mm and/or ≤ 100 mm, ≤ 80 mm, ≤ 60 mm, ≤ 50 mm, ≤ 45 mm or ≤ 25 mm. Preferred thicknesses are in the range of 10 to 45 mm or 16 to 22 mm. The length of the wood board may be ≥ 1.5 m, ≥ 2 m, ≥ 2.5 m or ≥ 3 m and/or ≤ 8 m, ≤ 6 m or ≤ 5 m. The width of the wood board may be ≥ 1 m, ≥ 1.2 m, ≥ 1.5m or ≥ 1.8 m and/or ≤ 4 m, ≤ 3 m or ≤ 3.5 m. The wood boards may have edges which are trimmed and/or cut and/or machined. The wood boards may be piled up and provided as a package comprising a plurality of boards arranged and/or bound together, for example to facilitate transport; the package may comprise an enveloping film, for example of a plastics material.

Subjecting the sheet of loosely arranged resinated wood matter to heat and pressure to cure the binder composition and to form the wood board from the sheet of loosely arranged resinated wood may comprise pressing the sheet of loosely arranged **resinated** wood matter between heated belts or plates, for example in a hot press, for example at a pressure which is ≥ 20 bar, ≥ 25 bar or ≥ 30 bar and/or ≤ 80 bar, ≤ 75 bar, ≤ 70 bar or ≤ 65 bar to obtain a cured wood particle board. The temperature or the heated belts or plates may be ≥ 100°C, ≥ 110°C or ≥ 120°C and/or ≤ 280°C, ≤ 260°C, ≤ 240°C, ≤ 220°C or ≤ 200°C. The press factor, that is to say the time during which the sheet of loosely arranged resinated wood matter is subjected to heat and pressure in a press to cure the binder composition and to form the wood board and expressed in seconds per mm of pressed thickness of the wood boards may be ≥ 2 s/mm, ≥ 3 s/mm, ≥ 4 s/mm or ≥ 5 s/mm and/or ≤ 10 s/mm, ≤ 9 s/mm, ≤ 8 s/mm or ≤ 7 s/mm.

During the pressing and/or heating and/or curing of the wood board, the internal temperature of the wood board, notably the temperature at the center of the board in its thickness direction, may be raised to a temperature which is:
a) ≥ 90°C, ≥ 100°C, ≥ 110°C, ≥ 115°C, ≥ 120°C, ≥ 130°C or ≥140 °C, and/or
b) ≤ 200°C, ≤ 180°C, ≤ 170°C or ≤ 160°C.

The temperature of the surface layer(s) of the wood board may be raised to a temperature which is:
a) ≥ 120°C, ≥ 130°C or ≥140 °C, and/or
b) ≤ 260°C, ≤ 220°C, or ≤ 200°C.

The wood matter may notably be wood particles and the wood board may be a particle board. The wood particles may comprise wood chips, wood flakes, wood strands sawmill shavings, saw dust, wood fibers and mixtures thereof. The wood particles may be selected from virgin wood, reclaimed wood or combinations thereof; the wood particles may be selected from birch, beech, alder, pine, spruce tropical wood and wood mixtures. Preferably, the wood particles contacted with the binder composition have a moisture content which is ≤ 8%, ≤ 6% or ≤ 5% by weight. The wood particles may be dried prior to being contacted with the binder composition; the dried wood particles may have a moisture content which is ≥1%, ≥1.5% or ≥2 % and ≤5%, ≤4% or ≤3.5% by weight.

The wood board may be a multi-layer wood particle board comprising at least one core layer arranged between two surface layers; it may be a three layer wood particle board. Where the wood board is a multi-layer wood particle board, the binder composition may be:
- a surface layer binder composition, that is to say a binder composition applied to surface layer wood particles; and/or
- a core layer binder composition, that is to say a binder composition applied to core layer wood particles.

The binder composition may be used as the surface layer binder composition and as the core layer binder composition; in this case:
- the reactants of the core layer binder composition may comprise a greater proportion of nitrogen-containing reactant(s), preferably a greater proportion of TPTA triprimary triamine(s), than the reactants of the surface layer binder composition; and/or
- the binder loading of the surface layer may be higher that the binder loading of the core layer, for example with a core layer binder loading which is ≥ 1.5 wt%, ≥ 2 wt% and ≤ 6 wt%, ≤ 5 wt% or ≤ 4 wt% and a surface layer binder loading which is ≥ 6 wt% ≥ 7 wt% or ≥ 8 wt% and/or ≤ 15 wt%.

The binder composition may be used only as the surface layer binder composition; in this case, a resin selected from phenol formaldehyde, urea formaldehyde, melamine-ureaformaldehyde, an isocyanate, such as methylene diphenyl diisocyanate, or a polyester may be used as the core layer binder composition.

Where the wood board is a wood particle board, its 24h swelling, as measured in accordance with EN 317:1993 may be as shown in Table 1:

**Table 1**

| Thickness range (mm, nominal) | Swelling in thickness, 24h | |
|---|---|---|
| | Preferred | More preferred |
| 3 to 4 | ≤ 23 % | ≤ 13 % |
| > 4 to 6 | ≤ 19 % | ≤ 12 % |
| > 6 to 13 | ≤ 16 % | ≤ 11 % |
| > 13 to 20 | ≤ 15 % | ≤ 10 % |
| > 20 to 25 | ≤ 15 % | ≤ 10 % |
| > 25 to 32 | ≤ 15 % | ≤ 10 % |
| > 32 to 40 | ≤ 14 % | ≤ 9 % |
| > 40 | ≤ 14 % | ≤ 9 % |

Where the wood board is a wood particle board, its internal bond strength, as measured in accordance with EN 319:1993 may be as shown in Table 2:

**Table 2**

| Thickness range (mm, nominal) | Internal bond (N/mm²) | |
|---|---|---|
| | Preferred | More preferred |
| 3 to 4 | ≥ 0.45 | ≥ 0.50 |
| > 4 to 6 | ≥ 0.45 | ≥ 0.50 |
| > 6 to 13 | ≥ 0.40 | ≥ 0.45 |
| > 13 to 20 | ≥ 0.35 | ≥ 0.45 |
| > 20 to 25 | ≥ 0.30 | ≥ 0.40 |
| > 25 to 32 | ≥ 0.25 | ≥ 0.35 |
| > 32 to 40 | ≥ 0.20 | ≥ 0.30 |
| > 40 | ≥ 0.20 | ≥ 0.25 |

Where the wood board is a wood particle board, its modulus of elasticity in bending, as measured in accordance with EN 310 may be as shown in Table 3:

**Table 3**

| Thickness range (mm, nominal) | Modulus of elasticity in bending (N/mm²) | |
|---|---|---|
| | Preferred | More preferred |
| 3 to 4 | ≥ 1950 | ≥ 2550 |
| > 4 to 6 | ≥ 2200 | ≥ 2550 |
| > 6 to 13 | ≥ 2300 | ≥ 2550 |
| > 13 to 20 | ≥ 2300 | ≥ 2400 |
| > 20 to 25 | ≥ 2050 | ≥ 2150 |
| > 25 to 32 | ≥ 1850 | ≥ 1900 |
| > 32 to 40 | ≥ 1500 | ≥ 1700 |
| > 40 | ≥ 1200 | ≥ 1550 |

Where the wood board is a wood particle board, its bending strength, as measured in accordance with EN 310 may be as shown in Table 4:

**Table 4**

| Thickness range (mm, nominal) | Bending strength (N/mm²) | |
|---|---|---|
| | Preferred | More preferred |
| 3 to 4 | ≥ 15 | ≥ 20 |
| > 4 to 6 | ≥ 16 | ≥ 19 |
| > 6 to 13 | ≥ 16 | ≥ 18 |
| > 13 to 20 | ≥ 15 | ≥ 16 |
| > 20 to 25 | ≥ 13 | ≥ 14 |
| > 25 to 32 | ≥ 11 | ≥ 12 |
| > 32 to 40 | ≥ 9 | ≥ 10 |
| > 40 | ≥ 7 | ≥ 9 |

Methods of manufacturing wood board according to the present invention allow for cure speeds which are at least equivalent to and indeed faster than those obtained with comparable binder systems. Similarly, the dry tensile strength of glass veils manufactured with the binder compositions of the present invention is at least equivalent to and indeed in some cases improved when compared to that obtained with comparable binder systems. Surprisingly, the wet strength of glass veils manufactured with the binder compositions of the present invention is significantly improved with respect to that obtained with comparable binder systems. The wet strength provides an indication of the performance after aging and/or after weathering and is indicative of swelling performance for wood boards. This is unexpected as it is generally expected that the wet strength of a glass veil will be lower than but proportional to its dry strength. Without wishing to be being bound by theory, it is believed that the improved properties of the binder compositions of the present invention are due to the use of TPTA triprimary triamine(s) and particularly due to the spacer groups being carbon chains with an absence of heteroatoms within the spacer groups and/or due to the spatial geometry of the TPTA triprimary triamine(s) molecules.

Embodiments of the invention will now be described, by way of example only, with reference to the accompanying figures of which:
Figs 1 and 2 show surface soundness results;
Figs 3 and 4 show 24h water swelling results;
Figs 5 and 6 show internal bond strength results;
Fig 7 shows 4-(aminomethyl)-1,8-octanediamine ("AMOD");
Fig 8 shows cure results of a laboratory cure test of triprimary polyamines;
Fig 9 shows a blow crack formed on a wood board made using TAEA as the nitrogen-containing reactant with a press time of 90s;
Fig 10 shows a wood board made using AMOD as the nitrogen-containing reactant with a press time of 90s; and
Fig 11 shows an example of TPTA triprimary triamine.

### Example 1: Wood particles boards

Wood particle boards are commonly manufactured using urea formaldehyde binders. The following compares:
Examples B1, B2, B3, B4, B5 and B6 which are laboratory manufactured three layer wood particle boards in accordance with the invention; with
Comparative examples C1, C2, C3, C4, C5 and C6 which are laboratory manufactured three layer wood particle boards manufactured using a common urea formaldehyde binder.

The laboratory manufactured particle boards described herein were manufactured contemporaneously in a way to enable comparison between them. Laboratory conditions and results are not necessarily directly comparable with results that would be obtained during industrial manufacture of particle boards. For example: results obtained using a binder loading of 8 wt% in the laboratory may be hoped to be achieved using a binder loading of 3-4 wt% during industrial manufacture; a press time of 7 s/mm in the laboratory may be required to simulate what could be hoped for using a press time of 4.5 s/mm during industrial manufacture; 24h water swelling of 30 % in the laboratory may provide an indication that a 24h water swelling of 15 % could be hoped for during industrial manufacture. Similarly, the present laboratory results may not be directly comparable with other laboratory results for example which use different methods, conditions, wood particles or equipment.

For the measurements conducted:
- surface soundness was tested in accordance with EN 311:2002. A circular groove (inner diameter of 35.7 mm) is cut 0.3 mm deep into the test sample. A steel pad is glued onto the board surface, on the cut surface portion. After the adhesive has hardened a tensile force is applied at constant speed so that failure occurs, preferably within the surface layer; the force at failure is recorded and expressed in Newtons per square millimeter.
- swelling was measured in accordance with EN 317:1993.
- internal bond strength (IB) was tested in accordance with EN 319:1993; this is intended to evaluate the tensile strength perpendicular to the plane of the test piece and expressed in N/mm².

Each of the examples B1, B2, B3, B4, B5 and B6 and comparative examples C1, C2, C3, C4, C5 and C6 was a three-layer particle board having:
- a length and width of about 300 x 300 mm;
- a pressed thickness of about 16 mm;
- a density of about 650 kg/m³; and
- a core:surface wood chip mass ratio 62:38;
   prepared by
- spraying a binder composition on to oven dried wood particles having a residual moisture content of about 3.5 wt% and thoroughly mixing;
- assembling the resinated wood particles into a resinated mat of loosely arranged resinated wood particles; and
- pressing the mat of loosely arranged resinated wood particles between heated plates of a press (pressure 56 bar; target plate temperature 180°C);
to cure the binder composition and to form the wood particle board.

The binders and press factors are described below. The same core type particles were used for each core and the same surface type particles were used for each surface layer, with the average particle size of the surface type particles being smaller than that of the core type particles.

Comparative examples C1, C2, C3, C4, C5 and C6 were produced using a commonly used urea formaldehyde binder available from Dynea under reference 10F102 using:
a) for the core layer binder composition:
   - a binder loading of 7.5 wt% on the wood particles;
   - an ammonium nitrate catalyst with the binder at a solids ratio of 4.5: 95.5 by weight catalyst: urea formaldehyde resin; and
b) for the surface layer binder composition:
   - a binder loading of 10 wt% on the wood particles;
   - an ammonium nitrate catalyst with the binder at a solids ratio of 0.5: 99.5 by weight catalyst: urea formaldehyde resin.

Examples B1, B2, B3, B4, B5 and B6 were produced with the following binder compositions:
a) for the core layer binder composition:
   - a binder composition prepared by combining reactants consisting of 69% by dry weight reducing sugar reactants and 31% by dry weight nitrogen-containing reactant where i) the reducing sugar reactants consisted of 50 wt% fructose and 50 wt% dextrose monohydrate; and the nitrogen-containing reactant consisted of 4-(aminomethyl)-1,8-octanediamine ;
   - a binder loading of 7.5 wt% on the wood particles; and
b) for the surface layer binder composition:
   - a binder composition prepared by combining reactants consisting of 79.2% by dry weight reducing sugar reactants and 20.8% by dry weight nitrogen-containing reactant where i) the reducing sugar reactants consisted of 50 wt% fructose and 50 wt% dextrose monohydrate; and the nitrogen-containing reactant consisted of 4-(aminomethyl)-1,8-octanediamine ;
   - a binder loading of 8 wt% on the wood particles.

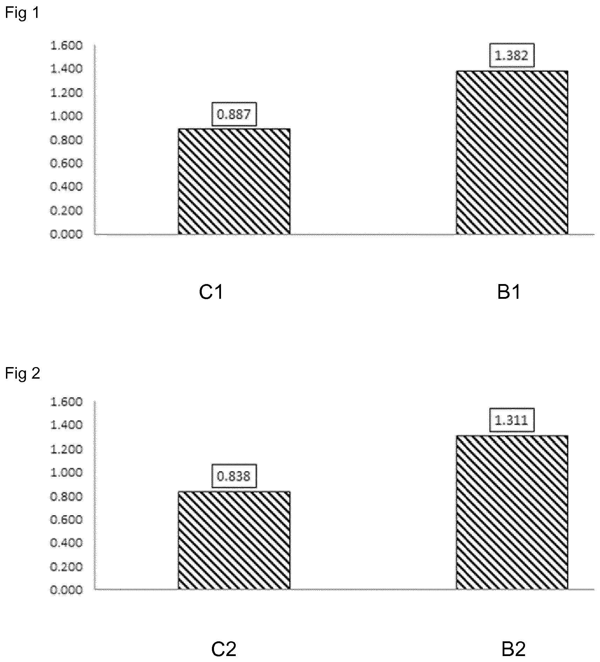

Boards B1 and C1 were each cured at a press factor of 10s/mm. Figure 1 shows a higher surface soundness for board B1 (about 1.4 N/mm²) compared with board C1 (about 0.9 N/mm²);
Each of boards B2 and C2 was cured at a press factor of 8 s/mm. Figure 2 shows a higher surface soundness for board B2 (about 1.3 N/mm²) compared with board C2 (about 0.8 N/mm²).

It is notable that higher surface soundness of B1 and B2 was achieved with a binder loading of 8 wt% in the surface layer compared with a surface layer binder loading of 10 wt% for C1 and C2.

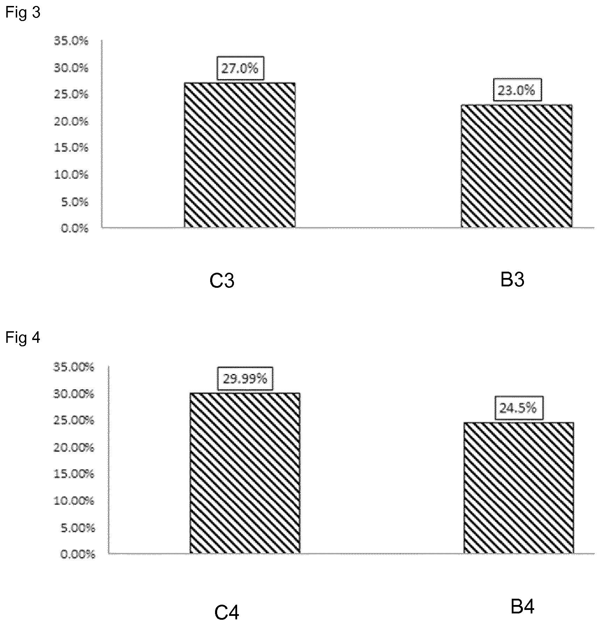

Boards B3 and C3 were each cured at a press factor of 10s/mm. Figure 3 shows a lower 24h water swelling for board B3 (about 23%) compared with board C3 (about 27%). Each of boards B4 and C4 was cured at a press factor of 8 s/mm. Figure 4 shows a lower 24h water swelling for board B4 (about 25%) compared with board C4 (about 30%).

It is again notable that B3 and B4 show such improvement of 24h water swelling compared to C3 and C4 despite the binder loading of the surface layer for C3 and C4 being 10 wt% and the binder loading of the surface layer of B3 and B4 being only of 8 wt%.

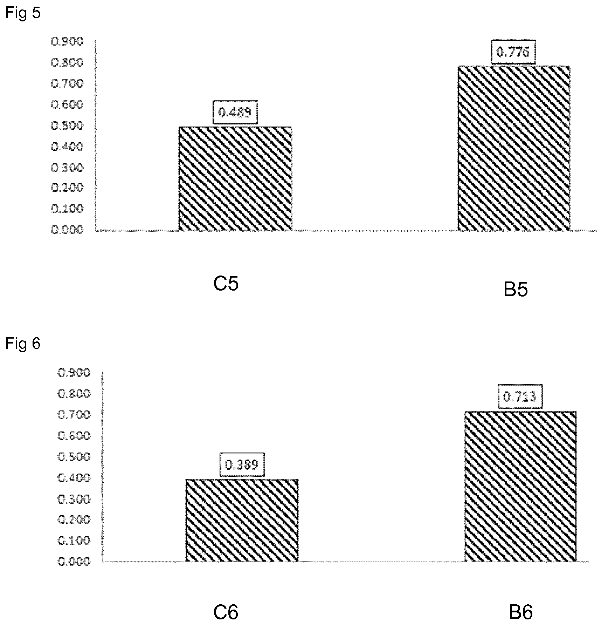

Boards B5 and C5 were each cured at a press factor of 10s/mm. Figure 5 shows a higher internal bond strength for board B5 (about 0.8 N/mm²) compared with board C5 (about 0.5 N/mm²).

Each of boards B6 and C6 was cured at a press factor of 8 s/mm. Figure 6 shows a higher internal bond strength for board B6 (about 0.7 N/mm²) compared with board C6 (about 0.4 N/mm²).

### Example 2: Laboratory indication of cure speed with HFCS:

The following binder compositions were prepared by combining a nitrogen containing reactant and a reducing sugar reactant

| Binder composition | nitrogen containing reactant | % dry weight | Notes |
|---|---|---|---|
| 1a | AMOD (4-(aminomethyl)-1,8-octanediamine | 22.5% | a TPTA triprimary triamine |
| 1b | TAPA (tris(3-aminopropyl)amine) | 24.0% | a triprimary tetramine |
| 1c | TAEA (tris(2-aminoethyl)amine) | 19.7% | a triprimary tetramine |

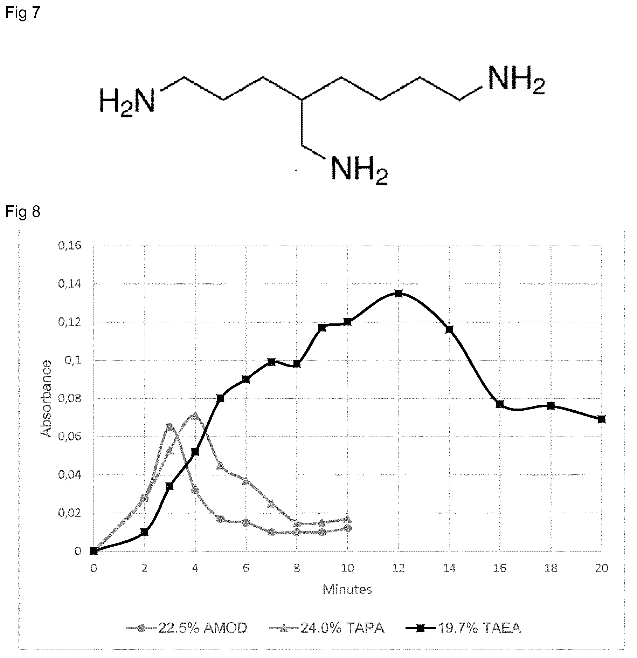

The nitrogen containing reactants of binder compositions 1b and 1c are not TPTA triprimary triamines and thus provide comparative examples. Each of the binder compositions was prepared by combining the nitrogen containing reactant with HFCS 42 (high fructose corn syrup with 42 % fructose + 52 % dextrose + trace quantities of other saccharides) in water to obtain a solution/dispersion containing 1 molar equivalent of triprimary polyamine to 3.31 molar equivalents of reducing sugars. The amounts of triprimary polyamines used in the binder compositions are expressed above and in Fig 8 as dry weight % (the remaining dry weight being the HFCS 42) and the binder compositions were prepared at 22.5 % total solids weight. Each binder composition was formulated to give a primary amine to carbonyl molar ratio on 1:1.105. Fig 8 shows the light absorbance of leachates from glass fiber filters: drops of the binder compositions were applied to the glass fiber filters which were then were placed in an oven at 107 °C and subsequently removed after set time intervals. Brown polymers were formed on the filters, then dissolved in water and the absorbance of the leachate measured using a spectrophotometer. The evolution of the formation of soluble brown polymers and insoluble polymers provides an initial laboratory indication of curing and cure speed for these type of binders.

Fig 8 shows that binder composition 1a using AMOD (4-(aminomethyl)-1,8-octanediamine, a TPTA triprimary triamine) shows a faster curing rate compared to binder composition 1b using TAPA (tris(3-aminopropyl)amine) and binder composition 1c using TAEA (tris(2-aminoethyl)amine) which are both triprimary tetramines.

### Example 3: Particle board

Single layer particleboard were prepared using AMOD (4-(aminomethyl)-1,8-octanediamine) or TAEA (tris(2-aminoethyl)amine)) as the sole nitrogen-containing reactant in a binder composition using a mixture of glucose and fructose as the reducing sugar reactant. The amounts of the reactants used in the binder compositions are expressed in Table 5 as dry weight % and the binder compositions were prepared at 70% total solids weight. The binder compositions were formulated to obtain a solution/dispersion containing 1 molar equivalent of triprimary polyamine to 2.25 molar equivalent of reducing sugars (primary amine to carbonyl mole ratio of 1:0.75). The boards (300 x 300 x 10 mm, 7.5 % binder loading) were pressed (504 N at 195°C) for 90 seconds, 100 seconds and 120 seconds). The internal bond strength (IB) was tested in accordance with EN 319:1993; the swelling test was performed in accordance with EN 317:1993.

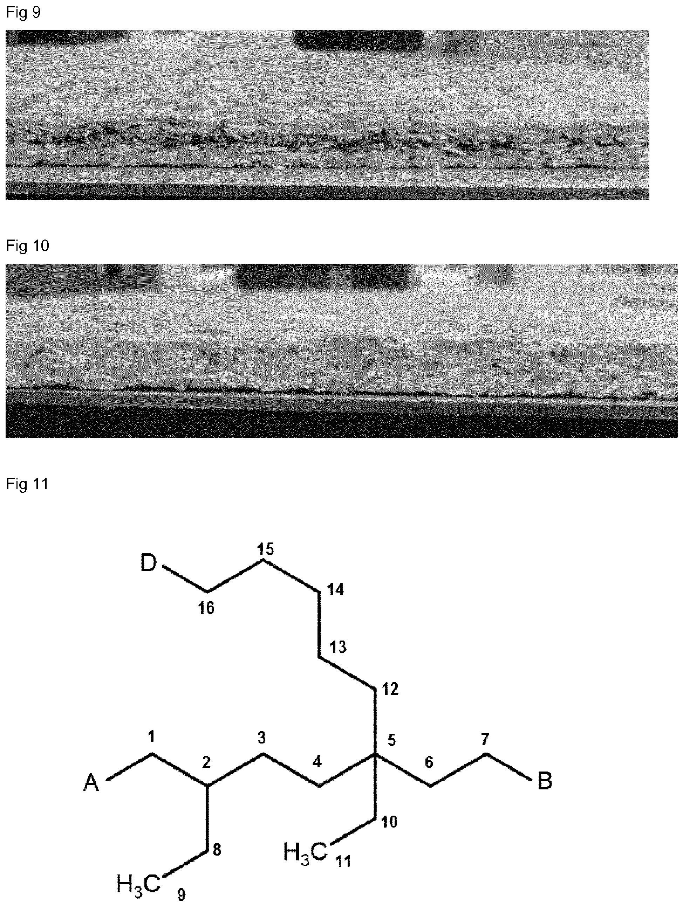

For the press time of 90s, the board made using TAEA as the nitrogen-containing reactant developed a blow crack when released from the press (see Fig 9); this type of defect is typically caused by insufficient cure of the binder composition. However, the board prepared using AMOD as the nitrogen-containing reactant had sufficiently cured at a time press of 90s and did not form a blow crack (see Fig 10) when released from the press.

**Table 5:**

| Binder composition (% dry weight) | Press Time (sec) | IB (N/mm²) | Swelling (after 24 hours) |
|---|---|---|---|
| 35% Glu + 35% Fru + 30% AMOD | 100 | 1.22 | 30.4 % |
| 36.7% Glu + 36.7% Fru + 26.6% TAEA | 100 | 0.92 | 37.7 % |
| 35% Glu + 35% Fru + 30% AMOD | 120 | 1.20 | 29.7 % |
| 36.7% Glu + 36.7% Fru + 26.6% TAEA | 120 | 0.99 | 37.3 % |

| | | | |
|---|---|---|---|
| Key: Glu= glucose; Fru= fructose; AMOD= 4-(aminomethyl)-1,8-octanediamine; TAEA= tris(2-aminoethyl)amine | | | |

The results show that the boards made with the binder composition with AMOD also gave a higher average IB than the boards made with the binder composition with TAEA (results based on the average of 8 tested 5cm x 5cm x 1cm blocks). The binder composition with AMOD gave better swelling results than the binder composition with TAEA.

The subsequent examples further demonstrate advantages of TPTA triprimary triamines in laboratory tests which can be extrapolated to manufacture of wood boards.

### Example 4

Examples of binder compositions tested on mineral fiber veils are shown in Table 6 with their respective mean dry veil tensile strengths and mean wet tensile strengths.

In each case, a nitrogen containing reactant comprising a triprimary polyamine was combined with HFCS 42 (high fructose corn syrup with 42 % fructose + 52 % dextrose + trace quantities of other saccharides) in water to obtain a solution/dispersion containing 1 molar equivalent of triprimary polyamine to 3.31 molar equivalent of reducing sugars. The amounts of triprimary polyamines used in the binder compositions are expressed in Table 6 as dry weight %, the remaining dry weight being the HFCS, and the binder compositions were prepared at 2 % weight (bake out solids). Once the binder compositions were prepared, they were applied to A4 size glass veil and the glass veils were cured to obtain a quantity of cured binder in the final product of 10 % LOI (loss on ignition).

Measurement of dry glass veil tensile strength:
8 pieces of cured glass veil with a dimension of 14.8 cm x 5.2 cm were cut from the cured A4 size veil and subjected to tensile testing by attaching a 50 Kg load cell using glass veil tensile plates on a testometric machine (TESTOMETRIC M350-10CT). The average of the total force in Newtons of the breaking strength is given in the table below. For the measurement of wet glass veil tensile strength, the veil samples are tested wet after being immersed in water at 80 °C for 10 minutes.

The column of wet strength % gives the % of mean wet tensile strength with respect to the % mean dry tensile strength.

**Table 6**

| Triprimary polyamine (% dry weight) | Mean dry tensile strength (N) | Mean wet tensile strength (N) | Wet strength % |
|---|---|---|---|
| TAEA (19.7 %) | 73.5 | 25.3 | 31.7% |
| TAPA (24.0 %) | 80.9 | 31.4 | 38.8 % |
| AMOD (22.5 %) | 75.3 | 41.4 | 55.0 % |

The results show that all the triprimary polyamines give good dry tensile strengths with TAPA giving a slightly better dry tensile strength compared to AMOD and TAEA. In regard of the wet tensile strengths, AMOD show better results compared to TAPA and TAEA. It is unexpected that the wet strength for AMOD was 55 % of the value of the dry tensile strength while for TAPA it was only of 38.8%.

### Example 5:

Examples of binder composition tested on mineral fiber veils are shown in Table 7 with the respective mean dry veil tensile strengths:
In each test, the nitrogen-containing reactant(s) were mixed with glucose in water. The amounts of the reactants used in the binder compositions are expressed in Table 7 as dry weight % and the binder compositions were prepared at 2% solids weight (bake out solids).

Once the binder compositions were prepared, they were applied to glass veil which were cured to obtain a quantity of cured binder in the cured veil of 10 % LOI (loss on ignition).

The dry tensile strength is measured in the same way as described in example 4.

**Table 7**

| Test Ref | Binder composition (% dry weight) | Mean dry tensile strength (N) |
|---|---|---|
| G (comparative) | 85% Glu + 15 % DAP | 76.5 |
| H (comparative) | 85% Glu + 15 % AS | 73.5 |
| I (comparative) | 85% Glu + 15 % TriCA | 93.0 |
| J | 85% Glu + 15 % AMOD | 81.0 |
| K | 85% Glu + 5 % AMOD + 10% DAP | 80.0 |
| L | 85% Glu + 7.5 % AMOD + 7.5% DAP | 80.2 |
| M | 85% Glu + 10 % AMOD + 5% DAP | 82.4 |
| N | 85% Glu + 5 % AMOD + 10% AS | 84.7 |
| O | 85% Glu + 7.5 % AMOD + 7.5% AS | 90.0 |
| P | 85% Glu + 10 % AMOD + 5% AS | 88.6 |
| Q | 85% Glu + 5 % AMOD + 10% TriCa | 88.0 |
| R | 85% Glu + 7.5 % AMOD + 7.5% TriCA | 91.4 |
| S | 85% Glu + 10 % AMOD + 5% TriCA | 87.9 |

| | | |
|---|---|---|
| Key: Glu=glucose; AS= ammonium sulphate; DAP= diammonium phosphate; TriCA = triammonium citrate; AMOD= 4-(aminomethyl)-1,8-octanediamine | | |

Binder compositions G, H and I are comparative examples of binder compositions with respectively only diammonium phosphate (DAP), ammonium sulfate (AS), and triammonium citrate (TriCa) as nitrogen-containing reactant. Binder composition J is a binder composition wherein the nitrogen-containing reactant consists of AMOD.

In examples K, L and M, the nitrogen-containing reactants consist of AMOD and DAP in different proportions. Examples J, K, L and M shows that similar levels of dry tensile strength are achieved for each of these binder compositions.

In examples N, O and P, the nitrogen-containing reactants consist of AMOD and AS in different proportions. The binder compositions N, O and P present higher dry tensile strengths compared to the result obtained with the binder composition J. Binder composition O seems to present an optimum result compared to binder compositions N and P. It is believed that there is a synergistic effect of the presence of AS and AMOD as the nitrogen-containing reactants.

Fig 11 illustrates a TPTA triprimary triamine having three primary amines A, B, D with spacer groups which consist of carbon chains between each of its three primary amines. Each carbon atom is numbered to facilitate the explanation below. The spacer group between primary amines A and B:
- has a spacer length of 7, ie carbon atoms 1, 2, 3, 4, 5, 6, 7 which together form the shortest chain of covalently bonded polyvalent atoms between primary amines A and B (the carbon atoms of the two branched chains 8, 9 and 10, 11 do not form part of the spacer length;
- has 11 polyvalent atoms, ie carbon atoms 1, 2, 3, 4, 5, 6, 7, 8, 9, 10 and 11(the carbon atoms 12, 13, 14, 15, 16 do not form part of the spacer group between A and B as they form a chain which connects the third primary amine D to the molecule).

The spacer group between primary amines A and D:
- has a spacer length of 10, ie carbon atoms 1, 2, 3, 4, 5, 12, 13, 14, 15, 16;
- has 14 polyvalent atoms, ie carbon atoms 1, 2, 3, 4, 5, 8, 9, 10, 11, 12, 13, 14, 15, 16. The spacer group between primary amines B and D:
- has a spacer length of 8, ie carbon atoms 7, 6, 5, 12, 13, 14, 15, 16;
- has 10 polyvalent atoms, ie carbon atoms 7, 6, 5, 12, 13, 14, 15, 16, 10, 11 (the chain of carbon atoms 4, 3, 2, 1, 8, 9 does not form part of the spacer group between B and D as this form a chain which connects the other primary amine A to the molecule.

The total number of polyvalent atoms in the molecule is 19, i.e. carbon atoms 1 to 16 and the 3 nitrogen atoms of the 3 primary amines A, B and D.

## Claims

1. A method of manufacturing a wood board, notably a wood particle board, comprising:
- applying a binder composition, notably in the form of an aqueous solution, to loose wood matter to provide resinated loose wood matter, wherein the binder composition consists of a binder composition prepared by combining reactants comprising at least 50% by dry weight reducing sugar reactant(s) and at least 5% by dry weight nitrogen-containing reactant(s); and
- arranging the resinated wood matter as a sheet of loosely arranged resinated wood matter; and
- subjecting the sheet of loosely arranged resinated wood matter to heat and pressure to cure the binder composition and to form the wood board from the sheet of loosely arranged resinated wood;
- wherein the nitrogen-containing reactant(s) comprise TPTA triprimary triamine(s), notably wherein the nitrogen-containing reactant(s) comprise at least 5% by dry weight of TPTA triprimary triamine(s), the TPTA triprimary triamine(s) being organic compound(s) having three and only three amines, each of the amines being primary amines or salts thereof, and having spacer groups between each of the three primary amines which consist of carbon chains.

2. A method according to claim 1, wherein the reducing sugar reactant(s) comprise reducing sugar reactant(s) selected from the group consisting of xylose, dextrose, fructose and combinations thereof.

3. A method according to any preceding claim, wherein the nitrogen-containing reactant(s) comprise triprimary triamine(s) selected from the group consisting of triaminodecanes, triaminononanes, triaminooctanes, triaminoheptanes, triaminohexanes, triaminopentanes, and combination thereof.

4. A method according to any preceding claim, wherein the nitrogen-containing reactant(s) comprise 4-(aminomethyl)-1,8-octanediamine.

5. A method according to any preceding claim, wherein the binder composition consists of a binder composition prepared by combining reactants consisting of between 60% and 95% by dry weight reducing sugar reactant(s) and between 5% and 40% by dry weight nitrogen-containing reactant(s).

6. A method according to any preceding claim, wherein the nitrogen-containing reactant(s) comprise at least 95 wt% of TPTA triprimary triamine(s).

7. A method according to any preceding claim, wherein the nitrogen-containing reactants comprise reactant(s) different from the TPTA triprimary triamine(s), notably wherein the nitrogen-containing reactants comprise polyprimary polyamine(s), notably diprimary diamine(s), notably diprimary diamines selected from the group consisting of 1,6-diaminohexane, 1,5-diamino-2-methylpentane, and combinations thereof.

8. A method according to any preceding claim, wherein the nitrogen-containing reactants comprise reactant(s) different from the TPTA triprimary triamine(s), notably wherein the nitrogen-containing reactants comprise inorganic or organic ammonium salt, notably selected from the group consisting of ammonium sulfate, ammonium phosphate, ammonium citrate, and combinations thereof.

9. A method according to any preceding claim wherein the binder composition is applied to the loose wood matter in the form of an aqueous solution which comprises 40 to 95 wt%, 45 to 90 wt%, 50 to 85 wt%, or 55 to 80 wt% of solids, based on the total weight of the aqueous binder composition.

10. A method according to any preceding claim wherein the binder composition is applied to the loose wood matter in the form of an aqueous solution which is prepared by combining all the reducing sugar reactant(s) and all the nitrogen-containing reactant(s) in a single preparation step.

11. A method according to any of claims 1 to 9 wherein the binder composition is applied to the loose wood matter in the form of an aqueous solution which is prepared by
- combining reducing sugar reactant(s), notably all of the reducing sugar reactant(s), with a first portion of the nitrogen-containing reactant(s) to provide an intermediate binder composition comprising reaction products of the reducing sugar reactant(s) and the first portion of the nitrogen-containing reactant(s),
- storing the intermediate binder composition; and
- combining the intermediate binder composition with a second portion of the nitrogen-containing reactant(s) to provide the binder composition.

12. A method according to any preceding claim wherein, in the form in which it is applied to the wood matter, the binder composition comprises, and notably consists essentially of, curable reaction product(s) of the reducing sugar reactant(s) and the nitrogen-containing reactant(s).

13. A wood board comprising wood matter held together by a cured thermoset binder, wherein the thermoset binder composition comprises a polymeric product of reducing sugar reactant(s) and nitrogen-containing reactant(s) and wherein the nitrogen-containing reactant(s) comprise triprimary triamine(s), the triprimary triamine(s) being organic compound(s) having three and only three amines, each of the amines being primary amines or salts thereof, having spacer groups between each of the three primary amines which consist of carbon chains, notably wherein the nitrogen-containing reactant(s) consist of 4-(aminomethyl)-1,8-octanediamine.

## Patentansprüche

1. Verfahren zur Herstellung eines Holzbretts, insbesondere eines Holzspanbretts, umfassend:
- das Aufbringen einer Bindemittelzusammensetzung, insbesondere in Form einer wässrigen Lösung, auf loses Holzmaterial, um loses harzhaltiges Holzmaterial bereitzustellen, wobei die Bindemittelzusammensetzung aus einer Bindemittelzusammensetzung besteht, die durch Kombinieren von Reaktanten, umfassend mindestens 50%, bezogen auf das Trockengewicht, reduzierende Zuckerreaktanten und mindestens 5%, bezogen auf das Trockengewicht, stickstoffhaltige Reaktanten, hergestellt wird; und
- das Anordnen des harzhaltigen Holzmaterials als Platte aus lose angeordnetem harzhaltigem Holzmaterial; und
- das Aussetzen der Platte aus lose angeordnetem harzhaltigem Holzmaterial Hitze und Druck, um die Bindemittelzusammensetzung zu härten und das Holzbrett aus der Platte aus lose angeordnetem harzhaltigem Holz zu bilden;
- wobei die stickstoffhaltigen Reaktanten triprimäre TPTA-Triamine umfassen, insbesondere wobei die stickstoffhaltigen Reaktanten mindestens 5%, bezogen auf das Trockengewicht, an triprimären TPTA-Triaminen umfassen, wobei die triprimären TPTA-Triamine organische Verbindungen mit drei und nur drei Aminen sind, wobei jedes der Amine ein primäres Amin oder ein Salz davon ist, und mit Abstandsgruppen zwischen jedem der drei primären Amine, die aus Kohlenstoffketten bestehen.

2. Verfahren nach Anspruch 1, wobei die reduzierenden Zuckerreaktanten reduzierende Zuckerreaktanten, ausgewählt aus der Gruppe, bestehend aus Xylose, Dextrose, Fructose und Kombinationen davon, umfassen.

3. Verfahren nach einem der vorhergehenden Ansprüche, wobei die stickstoffhaltigen Reaktanten triprimäre Triamine, ausgewählt aus der Gruppe, bestehend aus Triaminodecanen, Triaminononanen, Triaminooctanen, Triaminoheptanen, Triaminohexanen, Triaminopentanen und Kombinationen davon, umfassen.

4. Verfahren nach einem der vorhergehenden Ansprüche, wobei die stickstoffhaltigen Reaktanten 4-(Aminomethyl)-1,8-octandiamin umfassen.

5. Verfahren nach einem der vorhergehenden Ansprüche, wobei die Bindemittelzusammensetzung aus einer Bindemittelzusammensetzung besteht, die durch Kombinieren von Reaktanten, bestehend aus zwischen 60% und 95%, bezogen auf das Trockengewicht, reduzierenden Zuckerreaktanten und zwischen 5% und 40%, bezogen auf das Trockengewicht, stickstoffhaltigen Reaktanten, hergestellt wird.

6. Verfahren nach einem der vorhergehenden Ansprüche, wobei die stickstoffhaltigen Reaktanten mindestens 95 Gew.-% triprimäre TPTA-Triamine umfassen.

7. Verfahren nach einem der vorhergehenden Ansprüche, wobei die stickstoffhaltigen Reaktanten Reaktanten umfassen, die sich von den triprimären TPTA-Triaminen unterscheiden, insbesondere wobei die stickstoffhaltigen Reaktanten polyprimäre Polyamine, insbesondere diprimäre Diamine, insbesondere diprimäre Diamine, ausgewählt aus der Gruppe, bestehend aus 1,6-Diaminohexan, 1,5-Diamino-2-methylpentan und Kombinationen davon, umfassen.

8. Verfahren nach einem der vorhergehenden Ansprüche, wobei die stickstoffhaltigen Reaktanten Reaktanten umfassen, die sich von den triprimären TPTA-Triaminen unterscheiden, insbesondere wobei die stickstoffhaltigen Reaktanten ein anorganisches oder organisches Ammoniumsalz umfassen, insbesondere ausgewählt aus der Gruppe, bestehend aus Ammoniumsulfat, Ammoniumphosphat, Ammoniumcitrat und Kombinationen davon.

9. Verfahren nach einem der vorhergehenden Ansprüche, wobei die Bindemittelzusammensetzung auf das lose Holzmaterial in Form einer wässrigen Lösung aufgebracht wird, die 40 bis 95 Gew.-%, 45 bis 90 Gew.-%, 50 bis 85 Gew.-% oder 55 bis 80 Gew.-% Feststoffe, bezogen auf das Gesamtgewicht der wässrigen Bindemittelzusammensetzung, umfasst.

10. Verfahren nach einem der vorhergehenden Ansprüche, wobei die Bindemittelzusammensetzung auf das lose Holzmaterial in Form einer wässrigen Lösung aufgebracht wird, die durch Kombination aller reduzierenden Zuckerreaktanten und aller stickstoffhaltigen Reaktanten in einem einzigen Herstellungsschritt hergestellt wird.

11. Verfahren nach einem der Ansprüche 1 bis 9, wobei die Bindemittelzusammensetzung auf das lose Holzmaterial in Form einer wässrigen Lösung aufgebracht wird, die hergestellt wird durch
- das Kombinieren von den reduzierenden Zuckerreaktanten, insbesondere der gesamten reduzierenden Zuckerreaktanten, mit einem ersten Teil der stickstoffhaltigen Reaktanten, um eine intermediäre Bindemittelzusammensetzung, umfassend Reaktionsprodukte der reduzierenden Zuckerreaktanten und des ersten Teils der stickstoffhaltigen Reaktanten, bereitzustellen,
- das Lagern der intermediären Bindemittelzusammensetzung, und
- das Kombinieren der intermediären Bindemittelzusammensetzung mit einem zweiten Teil der stickstoffhaltigen Reaktanten, um die Bindemittelzusammensetzung bereitzustellen.

12. Verfahren nach einem der vorhergehenden Ansprüche, wobei die Bindemittelzusammensetzung in der Form, in der sie auf das Holzmaterial aufgebracht wird, härtbare Reaktionsprodukte der reduzierenden Zuckerreaktanten und der stickstoffhaltigen Reaktanten umfasst und im Wesentlichen daraus besteht.

13. Holzbrett, umfassend Holzmaterial, das durch ein gehärtetes wärmehärtbares Bindemittel zusammengehalten wird, wobei die wärmehärtbare Bindemittelzusammensetzung ein polymeres Produkt aus reduzierenden Zuckerreaktanten und stickstoffhaltigen Reaktanten umfasst und wobei die stickstoffhaltigen Reaktanten triprimäre Triamine umfassen, wobei die triprimären Triamine organische Verbindungen mit drei und nur drei Aminen sind, wobei jedes der Amine ein primäres Amin oder ein Salz davon ist, mit Abstandsgruppen zwischen jedem der drei primären Amine, die aus Kohlenstoffketten bestehen, insbesondere wobei die stickstoffhaltigen Reaktanten aus 4-(Aminomethyl)-1,8-octandiamin bestehen.

## Revendications

1. Procédé de fabrication d'un panneau en bois, notamment d'un panneau de particules de bois comprenant :
- l'application d'une composition de liant, notamment sous la forme d'une solution aqueuse, sur une matière ligneuse en vrac pour fournir une matière ligneuse en vrac résinée, où la composition de liant consiste en une composition de liant préparée en combinant des réactifs comprenant au moins 50 % en poids sec de réactif(s) sucre réducteur et au moins 5 % en poids sec de réactif(s) contenant de l'azote ; et
- l'agencement de la matière ligneuse résinée sous forme d'une feuille de matière ligneuse résinée disposée de manière lâche; et
- la soumission de la feuille de matière ligneuse résinée disposée de manière lâche à la chaleur et à la pression pour réticuler la composition de liant et former le panneau en bois à partir de la feuille de matière ligneuse résinée disposée de manière lâche;
- où le(s) réactif(s) contenant de l'azote comprennent une ou des triamine(s) triprimaire(s) TPTA, notamment où le(s) réactif(s) contenant de l'azote comprennent au moins 5% en poids sec de triamine(s) triprimaire(s) TPTA, la ou les triamine(s) triprimaire(s) TPTA étant un ou des composé(s) organique(s) ayant trois et seulement trois amines, chacune des amines étant des amines primaires ou leurs sels, et ayant des groupes espaceurs entre chacune des trois amines primaires qui consistent en des chaînes carbonées.

2. Procédé selon la revendication 1, dans lequel le(s) réactif(s) sucre réducteur comprennent un ou des réactif(s) sucre réducteur choisis dans le groupe consistant en du xylose, du dextrose, du fructose et leurs combinaisons.

3. Procédé selon l'une quelconque des revendications précédentes, dans lequel le ou les réactif(s) contenant de l'azote comprennent une ou des triamine(s) triprimaire(s) choisies dans le groupe consistant en des triaminodécanes, des triaminononanes, des triaminooctanes, des triaminoheptanes, des triaminohexanes, des triaminopentanes et leurs combinaisons.

4. Procédé selon l'une quelconque des revendications précédentes, dans lequel le ou les réactif(s) contenant de l'azote comprennent la 4-(aminométhyl)-1,8-octanediamine.

5. Procédé selon l'une quelconque des revendications précédentes, dans lequel la composition de liant consiste en une composition de liant préparée en combinant des réactifs consistant en 60 % à 95 % en poids sec de réactif(s) sucre réducteur et 5 % à 40 % en poids sec de réactif(s) contenant de l'azote.

6. Procédé selon l'une quelconque des revendications précédentes, dans lequel le(s) réactif(s) contenant de l'azote comprennent au moins 95 % en poids de triamine(s) triprimaire(s) TPTA.

7. Procédé selon l'une quelconque des revendications précédentes, dans lequel les réactifs contenant de l'azote comprennent un ou des réactif(s) différents de la ou des triamine(s) triprimaire(s) TPTA, notamment où les réactifs contenant de l'azote comprennent une ou des polyamine(s) polyprimaire(s), notamment une ou des diamine(s) diprimaire(s), notamment des diamines diprimaires choisies dans le groupe consistant en du 1,6-diaminohexane, du 1,5-diamino-2-méthylpentane, et leurs combinaisons.

8. Procédé selon l'une quelconque des revendications précédentes, dans lequel les réactifs contenant de l'azote comprennent un ou des réactifs différents de la ou des triamine(s) triprimaire(s) TPTA, notamment où les réactifs contenant de l'azote comprennent un sel d'ammonium inorganique ou organique, notamment choisi dans le groupe consistant en du sulfate d'ammonium, du phosphate d'ammonium, du citrate d'ammonium, et leurs combinaisons.

9. Procédé selon l'une quelconque des revendications précédentes, dans lequel la composition de liant est appliquée à la matière ligneuse en vrac sous la forme d'une solution aqueuse qui comprend 40 à 95 % en poids, 45 à 90 % en poids, 50 à 85 % en poids, ou 55 à 80 % en poids de solides, par rapport au poids total de la composition de liant aqueuse.

10. Procédé selon l'une quelconque des revendications précédentes, dans lequel la composition de liant est appliquée à la matière ligneuse en vrac sous la forme d'une solution aqueuse qui est préparée en combinant tous les réactifs sucres réducteurs et tous les réactifs contenant de l'azote en une seule étape de préparation.

11. Procédé selon l'une quelconque des revendications 1 à 9 dans lequel la composition de liant est appliquée à la matière ligneuse en vrac sous la forme d'une solution aqueuse qui est préparée en
- combinant le(s) réactif(s) sucre réducteur, notamment la totalité des réactifs sucres réducteurs, avec une première partie du ou des réactif(s) contenant de l'azote pour fournir une composition de liant intermédiaire comprenant les produits de réaction du ou des réactif(s) sucre réducteur et de la première partie du ou des réactif(s) contenant de l'azote,
- stockant la composition de liant intermédiaire ; et
- combinant la composition de liant intermédiaire avec une seconde partie du ou des réactif(s) contenant de l'azote pour fournir la composition de liant.

12. Procédé selon l'une quelconque des revendications précédentes dans lequel, sous la forme dans laquelle elle est appliquée à la matière ligneuse, la composition de liant comprend, et notamment consiste essentiellement en, un ou des produit(s) de réaction réticulable(s) du ou des réactif(s) sucre réducteur et du ou des réactif(s) contenant de l'azote.

13. Panneau de bois comprenant de la matière ligneuse maintenue ensemble par un liant thermodurcissable réticulé, dans lequel la composition de liant thermodurcissable comprend un produit polymère de réactif(s) sucre réducteur et de réactif(s) contenant de l'azote et dans lequel le(s) réactif(s) contenant de l'azote comprennent une ou des triamine(s) triprimaire(s), la ou les triamine(s) triprimaire(s) étant un ou des composé(s) organique(s) ayant trois et seulement trois amines, chacune des amines étant des amines primaires ou leurs sels, ayant des groupes espaceurs entre chacune des trois amines primaires qui consistent en des chaînes carbonées, notamment dans lequel le ou les réactif(s) contenant de l'azote consistent en la 4-(aminométhyl)-1,8-octanediamine.
